# EUROPEAN PATENT SPECIFICATION

(11) **EP 2 804 518 B1**
(45) Date of publication and mention of the grant of the patent: **26.10.2016**
(21) Application number: 13702545.8
(22) Date of filing: 18.01.2013
(51) Int. Cl.: A47L 15/00, F16C 29/02

(54) **DISHWASHING MACHINE OF THE MOVABLE HOOD TYPE, PROVIDED WITH AN IMPROVED SLIDING AND GUIDING SYSTEM FOR THE HOOD**
GESCHIRRSPÜLMASCHINE MIT BEWEGLICHER HAUBE SOWIE VERBESSERTES GLEIT- UND FÜHRUNGSSYSTEM FÜR DIE HAUBE
LAVE-VAISSELLE DE TYPE À CAPOT MOBILE MUNI D'UN SYSTÈME COULISSANT ET DE GUIDAGE PERFECTIONNÉ POUR LE CAPOT

(30) Priority: 20.01.2012 IT TO20120044
(43) Date of publication of application: 26.11.2014
(73) Proprietor: Premark FEG L.L.C., Glenview IL 60025 (US)
(72) Inventor: DONATI, Riccardo, 55011 Altopascio (IT); ORLANDI, Riccardo, 55011 Altopascio (IT)
(74) Representative: Plebani, Rinaldo
(86) International application number: PCT/US2013/022086
(87) International publication number: WO 2013/109845

(56) References cited:
- EP-A1- 0 578 862
- GB-A- 1 564 798
- US-A- 4 536 043
- US-A- 4 978 233

## Description

### TECHNICAL FIELD

The present invention relates to a professional dishwashing machine of the type in which the washing chamber is delimited between a tank and a hood which is vertically moveable with respect to the tank to allow to position dishes in, and remove dishes from, the tank, the dishes being arranged in a specific basket, which, in use, is enclosed within the hood, which rests in sealing manner on the tank.

### BACKGROUND ART

Such a type of dishwashing machine is known, for example, from US-A-4536043. The hood, which is defined by a generally parallelepiped-shaped shell, is supported from behind by respective lateral guides which belong to a casing of the dishwashing machine, which also supports the tank.

Although satisfactory, such a simplified sliding system may be subject to jamming, also because of the presence of the so-called "shearing" sheets among those forming the guides, generally has high frictions, which make the movement of the hood difficult and, in general, do not allow to prevent the release of steam and water along the guides during the operation of the machine, so that for this reason specific labyrinth systems must be provided, by means of highly complex folds of the sheets of the machine, which increase the costs of the system and limit its capacity of being cleaned, thus creating the possibility of undesired accumulations of dirt in points essentially either not accessible by the user or accessible only with extreme difficulty. GB1564798 *and* US4978233 *do not solve these problems.*

### DISCLOSURE OF INVENTION

It is the object of the present invention to provide a dishwashing machine for professional use of the described type which overcomes the drawbacks illustrated above, which has a reliable sliding system of the hood, is easy to make and fit, has a small size, prevents the release of steam and has low operation friction.

According to the invention a dishwashing machine for professional use is provided as disclosed in claim 1.

In particular, the sliding and guiding system comprises a rear panel of the casing, which vertically extends so as to protrude with respect to the tank; a pair of rectilinear bars having a double T profile cross section and provided with fastening elements obtained perpendicular to respective wings of the bars, which bars are fixed to the rear panel on the side of a first of said wings, so as to cover the whole height of the panel; and a pair of rectilinear profiled elements having a C-shaped cross section, each comprising a bottom wall fixed to the hood and a pair of opposite lateral walls, each provided, inside the profiled element, with a longitudinal rib.

The profiled elements are slidingly coupled to the bars and reproduce at the interior thereof the double T cross-section profile of the bars by means of ribs thereof inserted in respective longitudinal grooves of the bars defined by said double T profile. Furthermore, the rectilinear profiled elements are made of a pressed, sheared and bent metallic sheet, while the bars are made of extruded synthetic plastic material.

In this manner, a sliding and guiding system is obtained which may be easily integrated in the structure of the dishwashing machine, in particular in the rear panel of the bars and in the hood, the profiled elements reducing dimensions, having a low friction, in particular if a suitable synthetic material is chosen, and not being subject to jamming, and being additionally very reliable also because it is free from "shearing" sheets.

Furthermore, the inner profile of the profiled elements, which mimics the double T profile of the bars, in addition to ensuring support in all directions, forms a labyrinth seal between the bars and the profiled elements, which labyrinth is interposed between the fixed panel and the moveable hood, preventing, in use, the outward release of steam and water also without the use of sealing labyrinths outside the sliding system.

### BRIEF DESCRIPTION OF THE DRAWINGS

Further objects and advantages of the invention will be apparent from the description that follows of a non-limitative embodiment thereof, given only by way of example, set forth with reference to the accompanying drawings, in which:
- figure 1 diagrammatically shows a perspective three quarters front view of a professional dishwashing machine of the type with vertically moveable hood, made according to the invention;
- figures 2 and 3 show prospective, enlarged scale views of respective component elements of a sliding and guiding system for the hood of the dishwashing machine in figure 1;
- figure 4 shows an enlarged section view taken along a plotting plane IV-IV of a detail of the dishwashing machine in figure 1; and
- figure 5 diagrammatically shows a perspective view, on further enlarged scale, of the detail in figure 4, with parts of the dishwashing machine in figure 1 removed or simplified for the sake of greater comprehension.

### BEST MODE FOR CARRYING OUT THE INVENTION

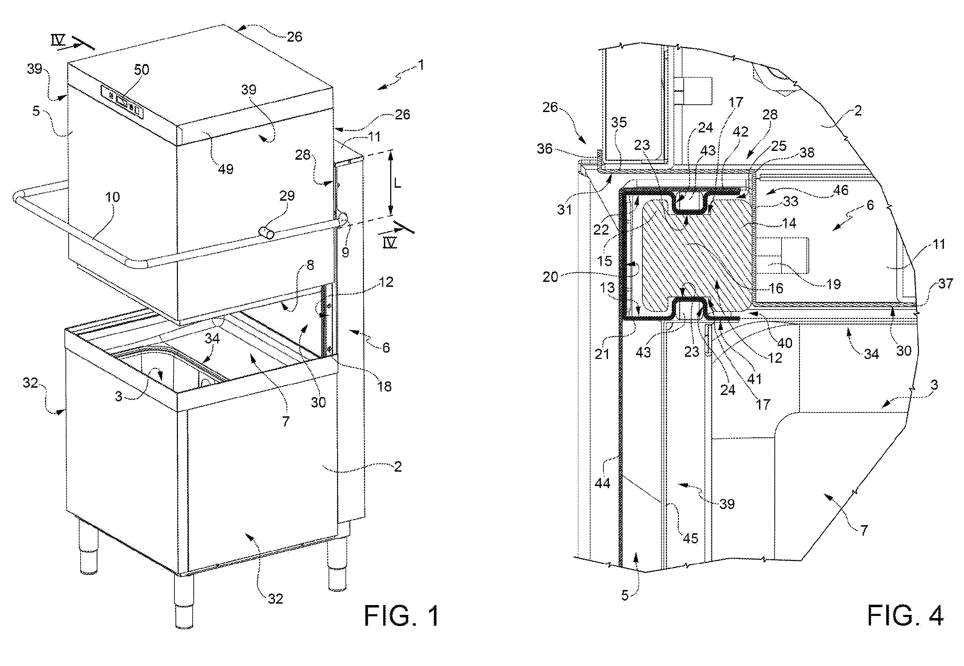

With reference to figures 1 to 5, reference numeral 1 shows as a whole a dishwashing machine, which will be called simply "dishwasher 1" hereinafter for the sake of simplicity, a supporting casing 2, a tank 3 carried at a bottom of the casing 2, and a hood 5 carried in a vertically sliding manner over the tank 3 by a sliding and guiding system 6 for the hood 5 to delimit, when the hood 5 is arranged against the tank 3, a washing chamber 7, accessible when the hood 5 on the contrary raised from the tank 3.

In particular, the hood 5 may assume a first end-of-stroke position, not shown for the sake of simplicity, passing through the mid stroke position in figure 1 (chamber 7 either half open or half closed, according to whether it is moving upwards or downwards), in which a lower edge 8 of the hood 5 abuts against the tank 3, and a second end-of-stroke position, also not shown for the sake of simplicity, in which the edge 8 is essentially at the height of a hinging point 9 of a pivoting handle 10 adapted to control the sliding of the hood 5.

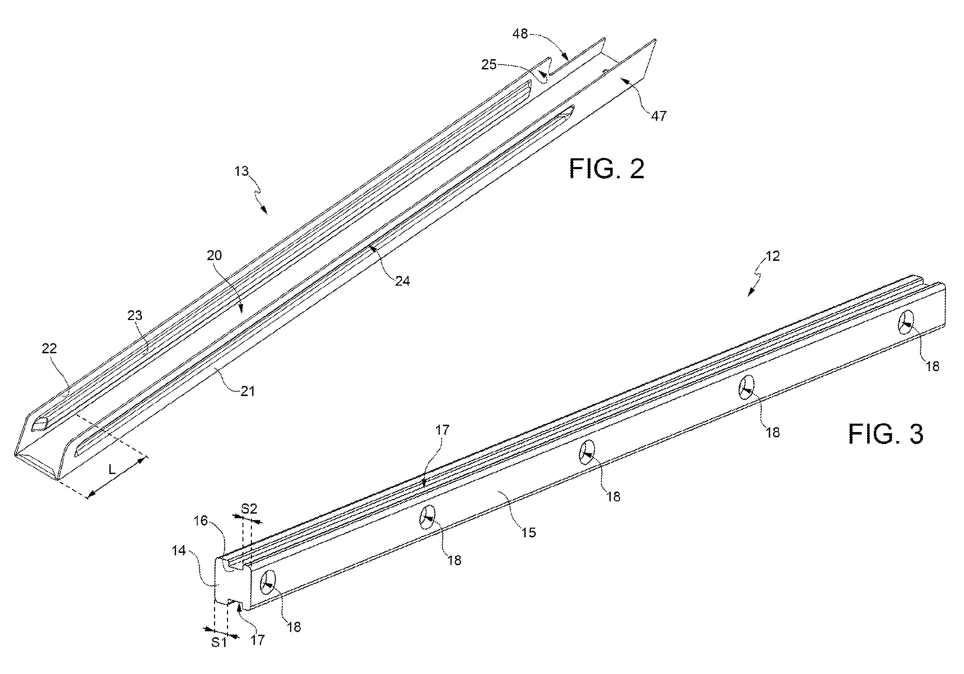

The sliding and guiding system 6 comprises a rear panel 11 of the casing 2, which overhangingly vertically extends from tank 3 and, according to the invention, a pair of rectilinear bars 12 (one of which is shown in figure 3) having a double T profile cross section, and a pair of rectilinear profiled elements 13 having a C-shaped cross section, one of which is shown more in detail in figure 2.

The bars 12 are made of an extruded synthetic plastic material and each comprise a first wing 14, made in the shape of a first elongated, rectilinear flat plate having rounded edges and having a first predetermined thickness S1, a second wing 15 arranged facing the first wing 14 and made in the shape of a second elongated, rectilinear flat plate similar to the first plate but having a smaller thickness S2, and a central portion 16 connecting the wings 14,15 to each other, perpendicularly thereto and having a smaller transversal extension (i.e. in direction parallel to the laying plane of the wings 13,14) than that of said plates defining the wings 13,14 so as to delimit therewith a pair of opposite longitudinal side grooves 17 of the bars 12, the presence of which determines a narrowing of the crosswise section (which would otherwise be essentially square with rounded vertexes), narrowing which imparts the mentioned double T shape to the cross section of each bar 12.

The bars 12 are additionally provided with fastening elements 18 obtained perpendicularly to the respective wings 14,15 and which consist of a plurality of through holes made through each bar 12, from wing 14 towards wing 15, and which are engaged in use (figure 4), as we will see, by respective fastening screws or bolts 19; in the illustrated example, the holes 18 are through holes and have two different diameters, smaller towards wing 14 and larger towards wing 15, so that they may accommodate the heads or nuts of the bolts 19 on the side of the wing 15 and within the same; alternatively, the holes 18 may also be blind towards wing 15 and threaded inside to couple directly with the screws 19, which at this point would only be introduced from the side of wing 14.

In the illustrated example and according to a preferred aspect of the invention, the bars 12 are fixed to the rear panel 11 from the side of the first wing 14, so as to cover the entire height of the panel 11 from the tank 3 to its top.

The rectilinear profiled elements 13 are instead made of a pressed, sheared and bent metallic sheet (e.g. stainless steel) and each comprise a bottom wall 20 which, as will be seen later, is in use, according to a preferred aspect of the invention, fixed to the hood 5, and a pair of opposite lateral walls 21,22, each provided, at the inside of the profiled element 13, with a longitudinal rib 23; the ribs 23 are defined by embossments 24, which are obtained by plastic deformation of the lateral walls 21,22 of the elements 13 so as to display respective concavities thereof facing towards the outside of the elements 13; the latter, by virtue of their cross section C-shape, define channel-like elements, which have a rectilinear inner concavity 25 defined between the bottom wall 20 and the lateral walls 21,22 and which reproduce, in cross section and within the elements 13, the double T cross section profile of the bars 12; the elements 13 are further dimensioned so that the inner profile of the double T profile of the concavities 25 mates with the outer profile of the cross section of the bars 12, so that the elements 13, according to the invention, are adapted to slidingly engage the bars 12 essentially without appreciable clearance, with the ribs 23 inserted in the longitudinal grooves 17 of the bars 12.

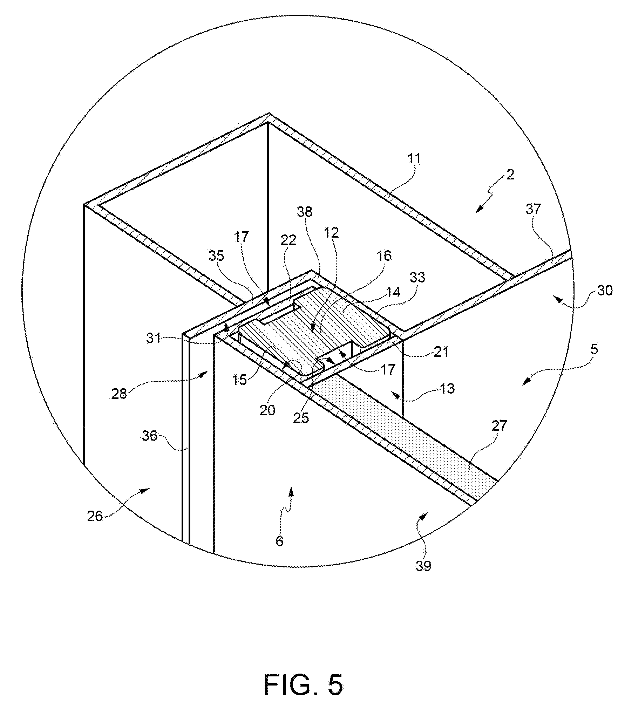

According to a preferred aspect of the invention, each C-shaped profiled element 13 is fixed along a whole rear vertical edge 26 of the hood, so as to entirely cover a whole height thereof; the hood 5 is formed by a parallelepiped-shaped shell made of folded metal sheet and preferably provided with an inner insulation 27 (figure 5), and thus has a pair of opposite vertical rear edges 11 (figure 1), each provided with an element 13. The arrangement of the elements 13 on the edges 26 is symmetric and therefore only a cross section of the dishwasher 1 taken at the left edge 26 in figure 1 is shown for the sake of simplicity in figures 4 and 5.

The rear panel 11 of the casing 2 carries the bars 12 arranged along the respective vertical edges 28 thereof for the entire height of the latter, so that by vertically inserting the hood 5 on the panel and making it slide parallel to the same, the channel-like elements 13 engage the bars 12; in particular, the panel 1 and the bars 12 extend vertically from the tank 3 to a height higher than that of the maximum stroke of the hood 5 (defined by the position of the hinging point 9), so that when the hood 5 is at a maximum distance from the tank 3 (thus with the edge 8 at the height of the hinging point 9 of the handle 10), the profiled elements 13 remain engaged in the bars 12 for a predetermined length L, indicated in figures 1 and 2, such that the casing 2 supports the hood 5 safely and substantially without clearance also in the extreme position of the hood 5, in which most of the hood 5 is arranged so as to protrude with respect to the casing 2 and, in particular, with respect to the panel 11.

According to an aspect of the invention, the maximum stroke of the hood 5 is defined by an end-of-stroke element 29 integrally carried by the hood 5 externally to the same. In the illustrated example, the element 29 is a block fixed laterally to the hood 5, which in use interferes with the movement of the lever 10, locking the hood in the end-of-stroke position farther away from the tank 3.

The washing chamber 7 is delimited by a front face 30 of the rear panel 11 of the casing 2, in addition to the hood 5 and the tank 3; the face 30 has, along the opposite lateral side edges 28 of the panel 11, for the entire height of the latter, respective step-shaped recesses 31 facing outwards from the casing 2, i.e. towards opposite lateral sides 32 of the same; each recess 31 is delimited by a first side 33 facing the tank 3 and arranged perpendicular to a rear edge 34 of the tank 3, which is parallel in turn to a laying plane of the rear panel 11, and by a second side 35 facing the opposite side of the tank 3 and parallel to the edge 34; a respective rectilinear bar 12 is accommodated within each recess 31, which bar is fixed to the side 33 of the recess 31 by means of the first wing 14, by means of the screws or bolts 19 passing through the side 33, which is provided with appropriate holes (not shown for the sake of simplicity) up to within the holes 18. The bars 12 are additionally dimensioned so that the second wing 15 is arranged substantially flushed with one end or edge 36 of the side 35, facing the side opposite side 33; the grooves 17 are arranged, in the direction of an extension in depth thereof (and consequently parallel to the width extension of the plates which define the wings 14,15), perpendicular to the side 35 of the recess 31.

In the illustrated case, the face 30 and the recesses 31 are defined respectively by a flat sheet 37 and by respective opposite L-folded sides 38 of the flat sheet 37 itself, the terminal edges 36 of which are preferably still L-folded backwards (figure 4).

The pair of profiled elements 13 having C-shaped cross section are fixed to the hood 5 in a vertically symmetric position, with the respective inner concavities 25 facing each other and the bottom walls 20 thereof fixed against respective opposite lateral walls 39 of the hood 5, behind the hood 5, so as to create at the opposite rear vertical edges 26 of the hood 5 a pair of rectilinear guides integral with the hood 5.

In particular, the rear vertical edges 26 of the hood 5 are each provided with a respective channel-like pocket 40 (figure 4); the pockets 40 are arranged vertically and each coaxially accommodate an element 13, with the lateral walls 21,22 of the latter sandwiched between a pair of lateral sides 41,42 of the pocket 40 arranged parallel to the rear edge 34 of the tank 3; inserts 43, e.g. full rectangular section bars made of synthetic plastic material, are accommodated within the concavities of the embossments 24 which define the ribs 23, and are interposed between the lateral walls 41,42 of the channel-like pockets 40 and the lateral walls 21,22 of the rectilinear profiled elements 13. In this manner, any possible deformation of the embossments 24 is avoided in use and the entire sliding and guiding system 6 is made considerably more robust. The pockets 40 are obtained, for example, by folding as an L the rear edges of an outer sheet 44 of the hood 5, which defines the outer surface of the hood 5, and by folding as an L an inner sheet 45 of the hood 5, which defines the inner surface of the hood 5 itself; the insulation 27 may be arranged between the metal sheets 44 and 45.

In this manner, an extremely compact arrangement of the sliding and guiding system 6 according to the invention is obtained, which further reduces the already minimum dimensions. Furthermore, the washing chamber 7 is further delimitated in the sliding zone of the hood 5 with respect to the panel 11, by a tortuous shape zone, defined by the pockets 40, by the bars 12 and by the profiled elements 13 inserted in the bars 12, which determine the creation of a labyrinth seal 46, which allows to avoid the release of steam from the washing chamber 7 also without the use of labyrinths outside the sliding system 6.

Preferably (figure 2), each profiled element 13 has an upper end 47 free from the ribs 23 and provided with a lateral recess 48, adapted to be inserted within an upper portion 49 (figure 1) of the hood 5 containing a control device 50 of the dishwashing machine 1; the rigidity of the elements 13 and of the hood 5 is thereby increased.

From the description it is apparent that, although the relative arrangement illustrated of the bars 12 and of the profiled elements 13 is that preferred in order to minimize the dimensions of the sliding and guiding system 6 in the specific case of use on the dishwasher 1 for moveably supporting the hood 5 on the casing 2, a relative arrangement of the bars 12 and of the elements 13 different from that shown may be determined, i.e. fixing the bars 12 to the moveable member (hood 5) and the elements 13 on the fixed member (panel 11 of the casing 2). Therefore, the invention, more in general, relates to a system 6 for supporting any moveable member (in this case, the hood 5) on any fixed member (in this case, the casing 2), comprising at least one bar 12 made by extruding synthetic plastic material provided with fastening elements 18 obtained perpendicularly to the wings 14,15 to make the bar 12 integral with one first of the members 2 and 5 by means of the wing 14; and at least one rectilinear profiled element 13 made of a pressed, bent and sheared metallic sheet, fixed to a second of the members 2,5 and having a C-shaped cross section, slidingly coupled to the bar 12, which reproduces the double T cross section profile inside, with the ribs 23 inserted within the longitudinal grooves 17 of the bar 12 so as to ensure guiding of the element 13 in all directions.

## Claims

1. A dishwashing machine (1) of the type comprising a supporting casing (2), a tank (3) carried at a lower part of the casing, and a hood (5) carried in a vertically sliding manner over the tank by a sliding and guiding system (6) for the hood to delimit, when the hood is arranged against the tank, a washing chamber (7), accessible when the hood is raised from the tank; the sliding and guiding system (6) comprising a rear panel (11) of the casing, which vertically extends so as to protrude with respect to the tank; **characterized in that** the sliding and guiding system further comprises: a pair of rectilinear bars (12) having a double T profile cross section and provided with fastening elements (18) obtained perpendicular to respective wings (14,15) of the bars, which bars are fixed to said rear panel (11) on the side of a first (14) of said wings, so as to cover the whole height of said panel; and a pair of rectilinear profiled elements (13) having a C-shaped cross section, each comprising a bottom wall (20) fixed to the hood (5) and a pair of opposite lateral walls (21,22) each provided at the inside of the profiled element with a longitudinal rib (23); the profiled elements being slidingly coupled to the bars, the profiled elements reproducing at the interior thereof the double T cross-section profile of the bars and having the ribs (23) inserted into respective longitudinal grooves (17) of the bars defined by said double T profile.

2. A dishwashing machine according to claim 1, **characterized in that** each of said C-shaped profiled element (13) is fixed along a whole rear vertical edge (26) of the hood, so as to entirely cover a whole height thereof; and **in that** the rear panel (11) of the casing and said bars (12) vertically extend from the tank up to an height upper than that of a maximum stroke of the hood (5), each bar being fixed along a whole lateral vertical edge (28) of the panel, so that when the hood is at a maximum distance from the tank (3) the profiled elements (13) remain engaged in the bars (12) over a predetermined length (L) such that the casing (2) supports the hood (5) substantially without clearance.

3. A dishwashing machine according to claim 2, **characterized in that** the maximum stroke of the hood (5) is defined by an end-of-stroke element (29) integrally carried by the hood (5) outside the same.

4. A dishwashing machine according to one of the preceding claims, **characterized in that** the washing chamber (7) is delimited by a front face (30) of the rear panel of the casing, in addition to said hood and said tank, which front face has respective step-shaped recesses (31) facing outwards from the casing, along opposite lateral vertical edges (28) of the panel, over the whole height of the latter, each step-shaped recess being delimited by a first side (33) facing the tank and arranged perpendicular to a rear edge (34) of the tank, which is in turn parallel to a laying plane of the rear panel, and by a second side (35) facing the opposite side of the tank and parallel to the rear edge (34) of the tank; a respective rectilinear bar (12) is accommodated within each recess (31), which bar is fixed to the first side (33) of the recess by means of the first wing (14), has a second wing (15) opposite to the first, arranged substantially flushed with one end (36) of the second side (35) of the recess facing the side opposite to the first side, and has said longitudinal grooves (17) arranged in the direction of their depth extension, perpendicular to the second side (35) of the recess.

5. A dishwashing machine according to any one of the preceding claims, **characterized in that** the pair of rectilinear profiled elements (13) having a C-shaped cross section are fixed to the hood (5) in a mirror-like symmetric vertical position, with respective inner cavities (25) thereof, defined between the bottom wall (20) and the lateral walls (21,22), facing towards each other and the bottom walls (20) thereof fixed against respective opposite lateral walls (39) of the hood, at the rear side of the hood, so as to create a pair of rectilinear guides integral with the hood at opposite vertical edges (26) of the hood.

6. A dishwashing machine according to claim 5, **characterized in that** the rear vertical edges (26) of the hood are provided with respective, vertically arranged channel-like pockets (40), each coaxially accommodating one of said profiled rectilinear elements (13), with the lateral walls (21,22) of the latter sandwiched between a pair of lateral walls (41,42) of the pocket arranged parallel to a rear edge (34) of the tank, which is in turn parallel to a laying plane of the rear panel (11).

7. A dishwashing machine according to claim 6, **characterized in that** said ribs (23) are defined by embossments (24) which were obtained by plastic deformation of the lateral walls (21,22) of the profiled rectilinear elements (13) so as to have respective concavities thereof facing the outside of the profiled rectilinear elements; inserts (43) accommodated within the concavities of the embossments (24) defining said ribs being interposed between the lateral walls (41,42) of the channel-like pockets (40) and the lateral walls (21,22) of the profiled rectilinear elements (13).

8. A dishwashing machine according to any one of the preceding claims, **characterized in that** said fastening elements consist of holes (18), which are engaged by respective fastening screws or bolts (19) to the rear panel (11).

9. A dishwashing machine according to any one of the preceding claims, **characterized in that** the profiled rectilinear elements (13) are made of a pressed, sheared and bent metallic sheet, while said bars (12) are made of an extruded synthetic plastic material and comprise the first wing (14) made in the form of a first elongated, rectilinear flat plate having rounded edges and a first predetermined thickness (S1), a second wing (15) arranged facing the first wing and made in the form of a second elongated, rectilinear flat plate similar to the first plate but having a smaller thickness (S2), and a central portion (16) connecting the first and second wings to each other, perpendicularly thereto and having a smaller transversal extension than that of said plates so as to delimit said longitudinal grooves (17) with the latter.

10. A dishwashing machine according to any one of the preceding claims, **characterized in that** each said profiled rectilinear element (13) has an upper end (47) free from said ribs and provided with a lateral recess (48), adapted to be inserted into an upper portion (49) of the hood containing the control device (50) of the dishwashing machine.

## Patentansprüche

1. Geschirrspülmaschine (1) des Typs, der Folgendes umfasst: ein tragendes Gehäuse (2), einen Tank (3), der von einem unteren Teil des Gehäuses getragen wird, und eine Haube (5), die vertikal über den Tank gleitend von einem Gleit- und Führungssystem (6) getragen wird, um die Haube abzugrenzen, wenn die Haube an dem Tank angeordnet ist, und ferner eine Waschkammer (7), die zugänglich ist, wenn die Haube von dem Tank angehoben ist; wobei das Gleit- und Führungssystem (6) eine Rückwandplatte (11) des Gehäuses, die sich vertikal derart erstreckt, dass sie in Bezug auf den Tank vorsteht, umfasst; **dadurch gekennzeichnet, dass** das Gleit- und Führungssystem ferner Folgendes umfasst: ein Paar geradliniger Stangen (12), die einen Querschnitt mit einem doppelten T-Profil aufweisen und die mit Befestigungselementen (18) versehen sind, die senkrecht zu den jeweiligen Flügeln (14, 15) der Stangen erhalten werden, wobei die Stangen auf der Seite eines ersten (14) der Flügel derart an der Rückwandplatte (11) befestigt sind, dass sie die gesamte Höhe der Platte abdecken; und ein Paar geradlinig profilierter Elemente (13), die einen C-förmigen Querschnitt aufweisen, wobei jedes eine Bodenwand (20), die an der Haube (5) befestigt ist, und ein Paar gegenüberliegender Seitenwände (21, 22), von denen jede auf der Innenseite des profilierten Elements mit einer Längsrippe (23) versehen ist, umfasst; wobei die profilierten Elemente gleitend mit den Stangen verbunden sind, wobei die profilierten Elemente in ihrem Inneren das doppelte T-Querschnittsprofil der Stangen reproduzieren und wobei die Rippen (23) in die jeweiligen Längsfugen (17) der Stangen eingefügt sind, die durch das doppelte T-Profil definiert sind.

2. Geschirrspülmaschine nach Anspruch 1, **dadurch gekennzeichnet, dass** jedes der C-förmig profilierten Elemente (13) entlang einer gesamten, rückwärtigen, vertikalen Kante (26) der Haube derart befestigt ist, dass es eine gesamte Höhe davon komplett abdeckt; und dass sich die Rückwandplatte (11) des Gehäuses und die Stangen (12) vertikal vom Tank bis zu einer Höhe erstrecken, die höher als die Höhe eines maximalen Hubs der Haube (5) ist, wobei jede Stange entlang einer gesamten seitlichen, vertikalen Kante (28) der Platte derart befestigt ist, dass die profilierten Elemente (13) über eine vorgegebene Länge (L) in den Stangen (12) in Eingriff bleiben, wenn sich die Haube in einem maximalen Abstand vom Tank (3) befindet, derart, dass das Gehäuse (2) die Haube (5) im Wesentlichen ohne Zwischenraum trägt.

3. Geschirrspülmaschine nach Anspruch 2, **dadurch gekennzeichnet, dass** der maximale Hub der Haube (5) durch ein Hubendeelement (29) definiert ist, das von der Haube (5) einteilig außerhalb derselben getragen wird.

4. Geschirrspülmaschine nach einem der vorhergehenden Ansprüche, **dadurch gekennzeichnet, dass** die Waschkammer (7) durch eine Stirnfläche (30) der Rückwandplatte des Gehäuses abgegrenzt wird, zusätzlich zur Haube und zum Tank, wobei die Stirnfläche jeweilige stufenförmige Vertiefungen (31) aufweist, die entlang der gegenüberliegenden, seitlichen, vertikalen Kanten (28) der Wandplatte über die gesamte Höhe davon vom Gehäuse nach außen zeigen, wobei jede stufenförmige Vertiefung von einer ersten Seite (33), die dem Tank zugewandt ist und die senkrecht zu einer rückwärtigen Kante (34) des Tanks angeordnet ist, die wiederum zu einer Lageebene der Rückwandplatte parallel ist, und durch eine zweite Seite (35), die der ge- genüberliegenden Seite des Tanks zugewandt ist und die parallel zur rückwärtigen Kante (34) des Tanks ist, definiert ist; wobei in jeder Vertiefung (31) eine jeweilige, geradlinige Stange (12) aufgenommen wird, wobei die Stange durch den ersten Flügel (14) an der ersten Seite (33) der Vertiefung befestigt ist, ferner gegenüber dem ersten Flügel einen zweiten Flügel (15) aufweist, der im Wesentlichen mit einem Ende (36) der zweiten Seite (35) der Vertiefung bündig ist, die der Seite zugewandt ist, die der ersten Seite gegenüberliegt, und ferner Längsfugen (17) aufweist, die in Richtung ihrer Tiefenausdehnung senkrecht zur zweiten Seite (35) der Vertiefung angeordnet sind.

5. Geschirrspülmaschine nach einem der vorhergehenden Ansprüche, **dadurch gekennzeichnet, dass** das Paar geradlinig profilierter Elemente (13), das einen C-förmigen Querschnitt aufweist, in einer spiegelbildlich symmetrischen, vertikalen Position an der Haube (5) befestigt ist, mit jeweiligen inneren Hohlräumen (25) davon, die zwischen der Bodenwand (20) und den Seitenwänden (21, 22), die einander zugewandt sind, und den Bodenwänden (20) davon, die an den jeweils gegenüberliegenden Seitenwänden (39) der Haube auf der Rückseite der Haube befestigt sind, derart definiert sind, dass einteilig mit der Haube an den gegenüberliegenden, vertikalen Kanten (26) der Haube ein Paar geradliniger Führungen erzeugt wird.

6. Geschirrspülmaschine nach Anspruch 5, **dadurch gekennzeichnet, dass** die rückwärtigen, vertikalen Kanten (26) der Haube mit jeweiligen, vertikal angeordneten, kanalähnlichen Taschen (40) versehen sind, von denen jede eines der profilierten, geradlinigen Elemente (13) koaxial aufnimmt, wobei deren Seitenwände (21, 22) zwischen einem Paar der Seitenwände (41, 42) der Tasche eingebettet werden, das parallel zu einer rückwärtigen Kante (34) des Tanks an- geordnet ist, die wiederum zu einer Lageebene der Rückwandplatte (11) parallel ist.

7. Geschirrspülmaschine nach Anspruch 6, **dadurch gekennzeichnet, dass** die Rippen (23) durch Warzen (24) definiert sind, die durch eine plastische Verformung der Seitenwände (21, 22) der profilierten, geradlinigen Elemente (13) derart erhalten wurden, dass die jeweiligen Konkavitäten davon der Außenseite der profilierten, geradlinigen Elemente zugewandt sind; wobei die Einschübe (43), die in den Konkavitäten der Warzen (24) aufgenommen sind, die die Rippen definieren, zwischen den Seitenwänden (41, 42) der kanalähnlichen Taschen (40) und den Seitenwänden (21, 22) der profilierten, geradlinigen Elemente (13) eingeschoben sind.

8. Geschirrspülmaschine nach einem der vorhergehenden Ansprüche, **dadurch gekennzeichnet, dass** die Befestigungselemente aus Löchern (18) bestehen, die durch jeweilige Befestigungsschrauben oder -bolzen (19) mit der Rückwandplatte (11) in Eingriff gebracht sind.

9. Geschirrspülmaschine nach einem der vorhergehenden Ansprüche, **dadurch gekennzeichnet, dass** die profilierten, geradlinigen Elemente (13) aus einem gepressten, geschnittenen und gebogenen Metallblech hergestellt sind, wobei die Stangen (12) aus einem stranggepressten, synthetischen Kunststoffmaterial hergestellt sind und den ersten Flügel (14), der in der Form einer ersten länglichen, geradlinigen, flachen Platte hergestellt ist, die gerundete Ecken und eine erste vorgegebene Dicke (S1) aufweist, einen zweiten Flügel (15), der derart angeordnet ist, dass er dem ersten Flügel zugewandt ist und der in der Form einer zweiten länglichen, geradlinigen, flachen Platte ähnlich der ersten Platte hergestellt ist, die jedoch eine kleinere Dicke (S2) aufweist, und einen Mittenabschnitt (16), der den ersten und den zweiten Flügel miteinander verbindet, der zu diesen senkrecht ist und der eine kleinere, quer gerichtete Ausdehnung als die der Platten derart aufweist, dass die Längsfugen (17) dadurch begrenzt werden, umfassen.

10. Geschirrspülmaschine nach einem der vorhergehenden Ansprüche, **dadurch gekennzeichnet, dass** jedes der profilierten, geradlinigen Elemente (13) ein oberes Ende (47) aufweist, das von den Rippen freisteht und mit einer Längsvertiefung (48) versehen ist, das ferner ausgelegt ist, in einen oberen Abschnitt (49) der Haube eingefügt zu werden, der die Steuervorrichtung (50) der Geschirrspülmaschine enthält.

## Revendications

1. Lave-vaisselle (1) du type comprenant une enceinte de support (2), un réservoir (3) porté à une partie inférieure de l'enceinte, et un capot (5) porté d'une manière verticalement coulissante sur le réservoir par un système coulissant et de guidage (6) pour le capot afin de délimiter, lorsque le capot est agencé contre le réservoir, une chambre de lavage (7) accessible lorsque le capot est soulevé du réservoir; le système coulissant et de guidage (6) comprenant un panneau arrière (11) de l'enceinte qui s'étend verticalement de manière à faire saillie par rapport au réservoir;
**caractérisé en ce que** le système coulissant et de guidage comprend en outre:
une paire de barres rectilignes (12) présentant une section transversale à profil en double T et pourvues d'éléments de fixation (18) obtenus perpendiculaire à des ailes respectives (14, 15) des barres, lesdites barres étant fixées audit panneau arrière (11) sur le côté d'une première (14) desdites ailes, de manière à couvrir la totalité de la hauteur dudit panneau; et
une paire d'éléments profilés rectilignes (13) présentant une section transversale en forme de C, comprenant chacun une paroi inférieure (20) fixée au capot (5) et une paire de parois latérales opposées (21, 22) pourvues chacune à l'intérieur de l'élément profilé d'une nervure longitudinale (23), les éléments profilés reproduisant à l'intérieur de ceux-ci le profil de section transversale à double T des barres et présentant les nervures (23) insérées dans des rainures longitudinales respectives (17) des barres définies par ledit profil en double T.

2. Lave-vaisselle selon la revendication 1, **caractérisé en ce que** chacun desdits éléments profilés en forme de C (13) est fixé le long de l'ensemble d'un bord vertical arrière (26) du capot, de manière à couvrir entièrement la totalité de la hauteur de celui-ci; et **en ce que** le panneau arrière (11) de l'enceinte et lesdites barres (12) s'étendent verticalement à partir du réservoir jusqu'à une hauteur supérieure à celle d'une course maximum du capot (5), chaque barre étant fixée le long de l'ensemble d'un bord vertical latéral (28) du panneau, de telle sorte que lorsque le capot se trouve à une distance maximum du réservoir (3), les éléments profilés (13) restent engagés dans les barres (12) sur une longueur (L) prédéterminée de telle sorte que l'enceinte (2) supporte le capot (5) sensiblement sans jeu.

3. Lave-vaisselle selon la revendication 2, **caractérisé en ce que** la course maximum du capot (5) est définie par un élément de fin de course (29) qui est porté intégralement par le capot (5) à l'extérieur de celui-ci.

4. Lave-vaisselle selon l'une quelconque des revendications précédentes, **caractérisé en ce que** la chambre de lavage (7) est délimitée par une face avant (30) du panneau arrière de l'enceinte, en plus dudit capot et dudit réservoir, ladite face avant comportant des évidements respectifs en forme de gradin (31) orientés vers l'extérieur de l'enceinte, le long de bords verticaux latéraux opposés (28) du panneau, sur l'ensemble de la hauteur de ce dernier, chaque évidement en forme de gradin étant délimité par un premier côté (33) faisant face au réservoir et agencé perpendiculairement à un bord arrière (34) du réservoir, qui à son tour est parallèle à un plan de pose du panneau arrière, et par un second côté (35) faisant face au côté opposé du réservoir et parallèle au bord arrière (34) du réservoir; une barre rectiligne respective (12) est logée à l'intérieur de chaque évidement (31), ladite barre est fixée au premier côté (33) de l'évidement au moyen de la première aile (14), comprend une deuxième aile (15) opposée à la première, agencée sensiblement à fleur d'une première extrémité (36) du second côté (35) de l'évidement faisant face au côté opposé au premier côté, et comporte lesdites rainures longitudinales (17) agencées dans la direction de leur étendue en profondeur, perpendiculairement au deuxième côté (35) de l'évidement.

5. Lave-vaisselle selon l'une quelconque des revendications précédentes, **caractérisé en ce que** la paire d'éléments profilés rectilignes (13) présentant la section transversale en forme de C sont fixés au capot (5) dans une position verticale symétrique inversée, avec des cavités intérieures respectives (25) de ceux-ci définies entre la paroi inférieure (20) et les parois latérales (21, 22), se faisant face mutuellement, et les parois inférieures (20) de ceux-ci étant fixées contre des parois latérales opposées respectives (39) du capot, au côté arrière du capot, de manière à créer une paire de guides rectilignes intégrés au capot à des bords verticaux opposés (26) du capot.

6. Lave-vaisselle selon la revendication 5, **caractérisé en ce que** les bords verticaux arrière (26) du capot sont pourvus de poches respectives en forme de canal agencées verticalement (40), chacune recevant de façon coaxiale un desdits éléments rectilignes profilés (13), les parois latérales (21, 22) de ces derniers étant coincées entre une paire de parois latérales (41, 42) de la poche agencées parallèlement à un bord arrière (34) du réservoir, qui est à son tour parallèle à un plan de pose du panneau arrière (11).

7. Lave-vaisselle selon la revendication 6, **caractérisé en ce que** lesdites nervures (23) sont définies par des bosselages (24) qui ont été obtenus par déformation plastique des parois latérales (21, 22) des éléments rectilignes profilés (13) de manière à avoir des concavités respectives de celles-ci faisant face à l'extérieur des éléments rectilignes profilés; des inserts (43) logés à l'intérieur des concavités des bosselages (24) définissant lesdites nervures étant interposées entre les parois latérales (41, 42) des poches en forme de canal (40) et les parois latérales (21, 22) desdits éléments rectilignes profilés (13).

8. Lave-vaisselle selon l'une quelconque des revendications précédentes, **caractérisé en ce que** lesdits éléments de fixation consistent en des trous (18) qui sont engagés par des vis ou des boulons de fixation respectifs (19) sur le panneau arrière (11).

9. Lave-vaisselle selon l'une quelconque des revendications précédentes, **caractérisé en ce que** les éléments rectilignes profilés (13) sont constitués d'une feuille métallique pressée, cisaillée et pliée, alors que lesdites barres (12) sont constituées d'une matière plastique synthétique extrudée et comprennent la première aile (14) se présentant sous la forme d'une première plaque plate rectiligne allongée présentant des bords arrondis et une première épaisseur prédéterminée (S1), une deuxième aile (15) agencée en face de la première aile et se présentant sous la forme d'une deuxième plaque plate rectiligne allongée similaire à la première plaque mais affichant une plus petite épaisseur (S2), et une partie centrale (16) connectant les première et deuxième ailes l'une à l'autre, perpendiculairement à celles-ci et présentant une plus petite étendue transversale que celle des plaques de manière à délimiter lesdites rainures longitudinales (17) avec ces dernières.

10. Lave-vaisselle selon l'une quelconque des revendications précédentes, **caractérisé en ce que** chacun desdits éléments rectilignes profilés (13) présente une extrémité supérieure (47) dépourvue desdites nervures et comportant un évidement latéral (48), et apte à être insérée dans une partie supérieure (49) du capot contenant le dispositif de commande (50) du lave-vaisselle.
